# FASCICULE DE BREVET EUROPEEN

(11) **EP 3 700 852 B1**
(45) Date de publication et mention de la délivrance du brevet: **27.10.2021**
(21) Numéro de dépôt: 18783550.9
(22) Date de dépôt: 24.09.2018
(51) Int. Cl.: B66C 1/12, B66C 1/16, B66C 1/66, F16H 57/033, B60P 7/08

(54) **ORIFICE D'ÉLINGAGE D'UN GROUPE MOTOPROPULSEUR DE VÉHICULE HYBRIDE OU ÉLECTRIQUE**
ANSCHLAGÖFFNUNG FÜR EINEN ANTRIEBSSTRANG EINES HYBRID- ODER ELEKTROFAHRZEUGS
SLINGING ORIFICE FOR A POWERTRAIN OF A HYBRID OR ELECTRIC VEHICLE

(30) Priorité: 24.10.2017 FR 1760016
(43) Date de publication de la demande: 02.09.2020
(73) Titulaire: PSA Automobiles SA, 78300 Poissy (FR)
(72) Inventeur: TEIXEIRA, Daniel, 95330 Domont (FR); BELLANGER, Laurent, 92700 Colombes (FR)
(86) Numéro de dépôt international: PCT/FR2018/052322
(87) Numéro de publication internationale: WO 2019/081827

(56) Documents cités:
- DE-A1-102010 051 821
- DE-U- 8 137 354
- FR-A1- 2 890 034
- FR-A3- 2 928 906

## Description

L'invention a trait au domaine des véhicules automobiles, plus particulièrement à la manutention d'un groupe motopropulseur au cours de son montage sur un véhicule automobile.

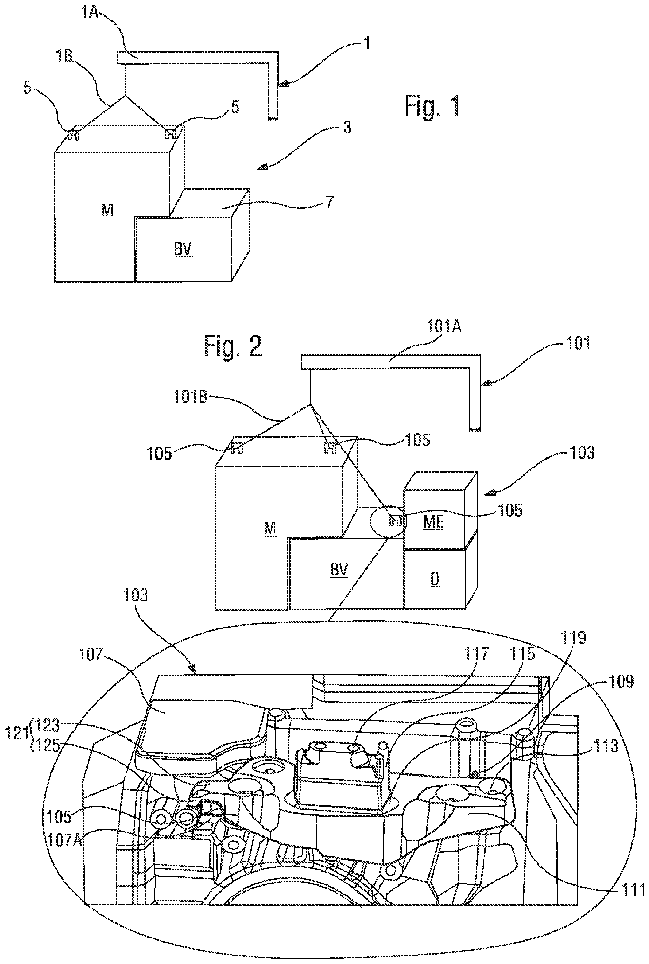

La figure 1 est un schéma représentant un système d'élingage pour un groupe motopropulseur de véhicule thermique tel que décrit dans l'art antérieur. Le système d'élingage 1 comprend principalement une grue d'élingage 1A sur laquelle est montée au moins une élingue de levage 1B. L'élingue de levage 1B est également reliée au groupe motopropulseur devant être monté dans le véhicule. Le système d'élingage 1 a donc vocation à permettre le transport et la mise en place de composants lourds, tel qu'un groupe motopropulseur, sur un châssis de véhicule automobile lors de son montage à l'usine terminale.

Le groupe motopropulseur d'un véhicule thermique est principalement constitué par une unité moteur-transmission 3. Cette unité 3 comprend un moteur à combustion M et une boîte de vitesse BV, tous deux comprenant une paroi extérieure 7. Deux orifices d'élingage 5 sont prévus de part et d'autre du moteur M en vue de faciliter l'équilibrage de l'unité moteur-transmission 3. Ces orifices d'élingage 5 sont donc positionnés au niveau du centre de gravité de l'unité moteur-transmission 3. Les orifices d'élingage 5 sont connus dans l'art antérieur et peuvent être des pièces rapportées vissées sur la paroi extérieure 7 de l'unité moteur-transmission 3, ou encore des orifices formés d'un seul tenant avec la paroi extérieure 7 de l'unité 3.

Mais dans un véhicule hybride ou électrique, l'intégration de certains composants supplémentaires à l'unité moteur-transmission est nécessaire pour son fonctionnement. Cette intégration entraîne alors une modification dans la répartition des masses de ladite unité ce qui la déséquilibre par rapport aux moteurs thermiques. De plus, la paroi extérieure de l'unité moteur-transmission est fortement contrainte de par la présence d'un grand nombre d'éléments qui sont non modifiables. Ceci rend difficile l'implantation d'un orifice d'élingage supplémentaire sur la paroi extérieure.

Le document de brevet publié FR 2 890 034 A1 divulgue un ensemble composé d'un carter de boîte de vitesse et d'un carter d'embrayage. Cet ensemble comprend en outre un élément formant une patte qui sert à la prise d'un outil de transport. Mais cette patte est formée d'une seule pièce avec le carter de la boîte de vitesse et/ ou du carter d'embrayage, ce qui nécessite obligatoirement la conception d'un nouveau moule intégrant la patte au carter. Celle-ci ne peut donc pas s'adapter à des modèles préexistants, ou à des modèles pour lesquels une modification dans la forme du carter serait délétère à son fonctionnement.

Le document de brevet publié DE 10 2010 051 821 A1 divulgue un système de transport pour un groupe motopropulseur. Le groupe motopropulseur comprend des bras de levage avec des ouvertures dans lesquelles sont insérés des éléments de transport. Les éléments de transport comprennent notamment un anneau qui sert d'accroche aux élingues de levage. Mais les éléments de transport sont prévus pour être couplés à des bras de levage montés de part et d'autre du groupe motopropulseur. Ce mécanisme n'est donc pas conçu pour être utilisé sur des groupes motopropulseurs préexistants, notamment s'ils comprennent une paroi de forme complexe. Le document DE 81 37 354 U divulgue un groupe motopropulseur selon le préambule de la revendication 1 et un véhicule selon le préambule de la revendication 9.

L'invention a pour objectif de pallier au moins un des inconvénients de l'état de la technique susmentionné. Plus particulièrement, l'invention a pour objectif de faciliter la manutention par élingage d'une unité moteur-transmission, notamment lorsqu'elle est susceptible de prendre différentes configurations, et ce de manière simple et économique.

L'invention a pour objet un groupe motopropulseur, notamment pour un véhicule hybride ou électrique, comprenant : une unité moteur-transmission avec une paroi extérieure, et au moins deux orifices d'élingage sur l'unité moteur-transmission, servant de fixation à une élingue de levage du groupe motopropulseur, remarquable en ce qu'au moins un des orifices d'élingage est formé, en partie, par une portion de la paroi extérieure de l'unité moteur-transmission et, en une autre partie, par une pièce rapportée complémentaire sur ladite paroi.

Selon un mode avantageux de l'invention, la pièce rapportée est un support de l'unité moteur-transmission, destinée à prendre appui sur le véhicule.

Selon un mode avantageux de l'invention, la pièce rapportée comprend une portion principale s'étendant horizontalement lorsque le groupe motopropulseur est en position de montage sur le véhicule et comprenant plusieurs orifices recevant des vis de fixation à l'unité moteur-transmission, et un doigt s'étendant horizontalement depuis la portion principale.

Selon un mode avantageux de l'invention, le doigt présente un profil creux dirigé vers le bas et vers la portion de la paroi extérieure de l'unité moteur-transmission.

Avantageusement, le doigt comprend une portion longitudinale s'étendant depuis une section latérale de la portion principale de la pièce rapportée, et une extrémité en continuité avec ladite portion longitudinale et qui est orientée vers la portion de la paroi extérieure de l'unité moteur-transmission.

Avantageusement, au moins une, de la portion de paroi extérieure de l'unité moteur-transmission et de la pièce rapportée formant l'orifice d'élingage, présente un profil creux.

Selon un mode avantageux de l'invention, la pièce rapportée comprend une excroissance complémentaire avec la portion de la paroi extérieure de l'unité moteur-transmission.

Selon un mode avantageux de l'invention, la portion de la paroi extérieure de l'unité moteur-transmission présente un profil creux et une cavité annexe, l'excroissance s'étendant au-dessus du profil creux en vue de former l'orifice d'élingage et ayant une extrémité engageant dans la cavité annexe.

Selon l'invention, l'orifice d'élingage présente un contour avec une ouverture correspondant à un entrefer formé par la pièce rapportée et la portion de la paroi extérieure de l'unité moteur-transmission.

Selon un mode avantageux de l'invention, l'entrefer présente un écartement maximum inférieur à 15mm et/ou supérieur à 5mm.

Selon un mode avantageux de l'invention, l'unité moteur-transmission comprend un moteur à combustion, une boîte de vitesses et un moteur électrique, la portion de paroi et la pièce rapportée complémentaire, formant l'orifice d'élingage, étant sur la boîte de vitesses.

Préférentiellement, l'unité moteur-transmission comprend en outre un onduleur. Avantageusement, la portion principale de la pièce rapportée est réalisée dans un matériau métallique. La pièce rapportée comprend en outre une portion secondaire, positionnée dans une ouverture longitudinale et médiane à la portion principale, cette portion secondaire étant réalisée dans un matériau plastique ou préférentiellement thermoplastique, tel qu'un élastomère. La portion secondaire s'étend verticalement à la portion principale et présente une hauteur similaire à celle-ci, ladite portion secondaire étant apte à faciliter le maintien du moteur sur le châssis du véhicule et donc à en limiter les vibrations. Avantageusement, la portion secondaire comprend en outre des orifices, ces orifices étant aptes à accueillir des vis de fixation.

L'invention a également pour objet un véhicule automobile, notamment un véhicule hybride ou électrique, ledit véhicule comprenant au moins : un groupe motopropulseur avec une unité moteur-transmission et au moins deux orifices d'élingage, et un châssis apte à supporter le groupe motopropulseur, remarquable en ce qu'au moins un ou les orifices d'élingage est formé par une portion d'une paroi extérieure de l'unité moteur-transmission et par une pièce rapportée complémentaire sur ladite paroi.

Les mesures de l'invention sont intéressantes en ce qu'elles facilitent le positionnement et l'installation d'un orifice d'élingage sur la paroi extérieure de l'unité moteur-transmission, et ce quelle que soit la configuration de ladite unité. En effet, l'encombrement de la paroi extérieure de l'unité moteur-transmission ainsi que l'impossibilité d'en déplacer les différents éléments qui la composent peuvent rendre difficile la mise en place d'un nouvel orifice d'élingage. D'autant que la zone idéale de placement de l'orifice est dépendante du centre de gravité de l'unité moteur-transmission. L'orifice d'élingage selon l'invention présente donc l'avantage de pouvoir être déplacé et installé selon les différents facteurs précités, et ce afin de permettre un élingage efficace de l'unité moteur-transmission sur le châssis du véhicule. De plus, l'invention implique une seule modification dans la fabrication de la pièce rapportée, donc un faible coût d'usinage, de conception et une facilité d'intégration aux unités préexistantes. L'usinage de la pièce rapportée métallique est également aisé. L'utilisation d'un support moteur dans le cadre de l'invention permet de maintenir efficacement l'unité moteur-transmission sur le châssis du véhicule et également de limiter les vibrations produites lors de la conduite dudit véhicule. Enfin, l'intégration de l'orifice d'élingage au support moteur permet de limiter le nombre de pièces à fabriquer et à concevoir, donc de réduire les coûts de fabrication.

D'autres caractéristiques et avantages de la présente invention seront mieux compris à l'aide de la description et des dessins parmi lesquels :
- La figure 1 est un schéma représentant un système d'élingage pour un moteur thermique tel que décrit dans l'art antérieur,
- La figure 2 est un schéma représentant un système d'élingage pour un moteur hybride ou un moteur électrique avec un grossissement sur un orifice d'élingage selon l'invention,
- La figure 3 est un grossissement de l'orifice d'élingage de la figure 2,
- La figure 4 est un schéma représentant une variante de réalisation de l'invention.

La figure 1 est décrite précédemment en relation avec l'état de la technique.

La figure 2 montre une vue d'un groupe motopropulseur monté sur un système d'élingage par le biais d'au moins deux orifices d'élingage, ainsi qu'un grossissement sur la zone de fixation entre l'orifice d'élingage selon l'invention et le groupe motopropulseur.

Le système d'élingage 101 supporte une unité moteur-transmission 103 du groupe motopropulseur selon l'invention. Le système d'élingage 101 comprend comme précédemment une grue d'élingage 101A, sur laquelle sont montées une ou plusieurs élingues de levage 101B, les élingues 101B étant aptes à être accrochées, par le biais d'un crochet ou d'une pince, aux orifices d'élingage 105 selon l'invention. L'unité moteur-transmission 103 à quant à elle la particularité, dans les véhicules électriques ou hybrides, de comporter des composants supplémentaires qui alourdissent l'unité 103 et provoquent un déséquilibre si les orifices d'élingages 105 sont conservés à la même place que dans les configurations à moteur thermique uniquement. L'unité moteur-transmission 103 comprend donc un moteur à combustion M et une boîte de vitesse BV, auxquels s'ajoutent un moteur électrique ME et un onduleur O. Les orifices d'élingages 105 sont au moins au nombre de deux par unité moteur-transmission 103. Préférentiellement, l'un des orifices 105 est positionné sur le moteur M, le deuxième étant positionné sur la boîte de vitesse BV de l'unité moteur-transmission 103, de manière à assurer un levage équilibré de ladite unité 103.

Le grossissement montre plus précisément l'orifice d'élingage 105 monté sur la boîte de vitesse BV du véhicule. Cet orifice d'élingage 105 est partiellement constitué d'une portion 107A d'une paroi extérieure 107 de l'unité moteur -transmission 103. L'orifice d'élingage 105 est également partiellement constitué par une excroissance 121 d'une pièce rapportée 109 complémentaire à la portion 107A de la paroi extérieure 107. Cette pièce rapportée 109 est plus préférentiellement un support 109 de l'unité moteur-transmission 103. Classiquement, ces supports 109 sont au nombre de trois sur l'unité moteur-transmission 103 du véhicule automobile, et ont vocation à fixer de manière souple ladite unité 103 à la caisse du véhicule. Ils limitent ainsi les effets dus aux vibrations produites par le moteur M.

La pièce rapportée 109 ou support moteur 109 est elle-même constituée par une portion principale 111 qui s'étend horizontalement sur la paroi extérieure 107 supérieure du groupe motopropulseur quand celui-ci est monté sur le véhicule. La portion principale 111 comprend des orifices de fixation 113 dans lesquels s'insèrent des vis de fixation (non représentées sur ces figures), et qui servent au maintien de la pièce rapportée 109 sur la paroi extérieure 107 de l'unité moteur-transmission 103. La portion principale 111 est préférentiellement réalisée dans un matériau métallique. La pièce rapportée 109 peut comprendre en outre une portion secondaire 115 avec des orifices de fixation 117 qui sont préférentiellement au nombre de deux, la portion secondaire 115 étant montée centralement dans une ouverture médiane 119 de la portion principale 111 de la pièce rapportée 109. La portion secondaire 115 de la pièce rapportée 109 s'étend verticalement sur la portion principale 111, et présente une hauteur similaire à celle de la portion principale 111. La portion secondaire 115 est préférentiellement réalisée dans un matériau plastique, plus préférentiellement dans un matériau thermoplastique tel qu'un élastomère, qui permettent de réaliser la fonction d'amortissement des supports moteurs 109. De la portion principale 111 de la pièce rapportée 109 s'étend, horizontalement et latéralement à ladite pièce 105, l'excroissance 121, formant préférentiellement un doigt 121, et présentant un profil creux dirigé vers le bas. Le doigt 121 comprend une portion longitudinale 123 qui s'étend depuis une section latérale de la portion principale 111 et au-dessus de la portion 107A de la paroi extérieure 107 de l'unité de transmission 103. La portion longitudinale 123 se prolonge vers la portion 107A de la paroi extérieure 107 par une extrémité 125. Le doigt 121 présente préférentiellement un diamètre compris entre 30 et 50mm, et une résistance à au moins 100kg de charge.

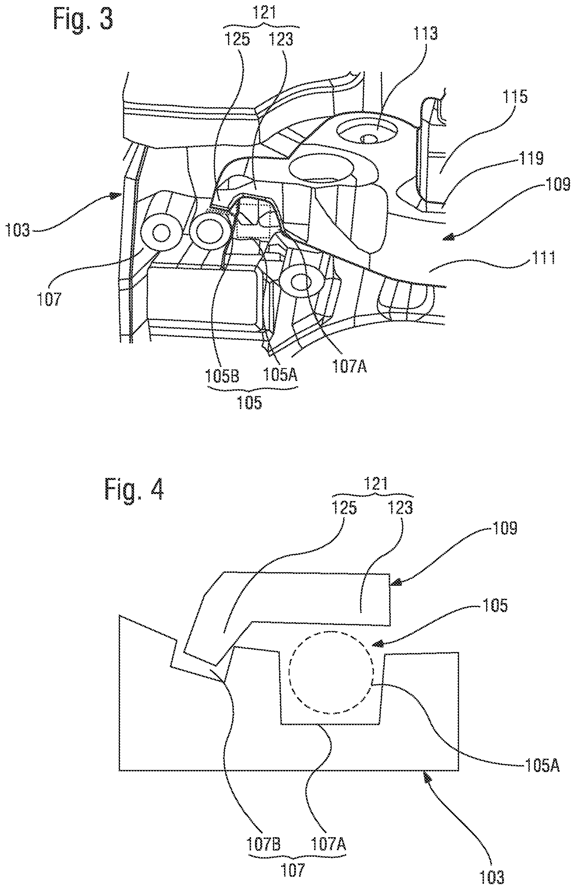

La figure 3 est une vue agrandie de l'orifice d'élingage de la figure 2. L'orifice d'élingage 105 est constitué par un contour 105A formé par la portion 107A de la paroi extérieure 107 de l'unité moteur-transmission 103, ainsi que par la surface inférieure du doigt 121 de la pièce rapportée 109. L'orifice d'élingage 105 est également constitué par une ouverture 105B, ou entrefer 105B, cet entrefer 105B étant positionné entre l'extrémité 125 du doigt 121 et la portion 107A de la paroi extérieure 107 de l'unité moteur-transmission 103. L'entrefer 105B présente un écartement maximum inférieur à 15mm, et/ou supérieur à 5mm.

L'orifice d'élingage présente ainsi l'avantage d'être facilement adaptable à des groupes motopropulseurs déjà existants, il peut également s'intégrer à des structures complexes et difficilement modifiables. Il est également peu coûteux et peut être facilement fabriqué.

La figure 4 est un schéma représentatif d'une variante de réalisation de l'invention. La paroi extérieure 107 de l'unité moteur-transmission 103 comprend la portion 107A formant une partie de l'orifice d'élingage 105 et une cavité annexe 107B. Cette cavité annexe 107B est préférentiellement une cavité existante à la surface de l'unité moteur-transmission 103. Dans cette cavité annexe 107B s'insère l'extrémité 125 du doigt 121 de la pièce rapportée 109. Cette variante permet de diminuer le risque de séparation des deux parties de l'orifice d'élingage 105 lors du transport de l'unité moteur-transmission 103.

## Revendications

1. Groupe motopropulseur, notamment pour un véhicule hybride ou électrique, comprenant :
- une unité moteur-transmission (3; 103) avec une paroi extérieure (7 ; 107), et
- au moins deux orifices d'élingage (5 ; 105) sur l'unité moteur-transmission (3; 103), servant de fixation à une élingue de levage (1B; 101B) du groupe motopropulseur,
- au moins un des orifices d'élingage (105) étant formé, en partie, par une portion (107A) de la paroi extérieure (107) de l'unité moteur-transmission (103) et, en une autre partie, par une pièce rapportée (109) complémentaire sur ladite paroi (107),
**caractérisé en ce que** l'orifice d'élingage (105) présente un contour (105A) avec une ouverture (105B) correspondant à un entrefer (105B) formé par la pièce rapportée (109) et la portion (107A) de la paroi extérieure (107) de l'unité moteur-transmission (103).

2. Groupe motopropulseur selon la revendication 1, **caractérisé en ce que** la pièce rapportée (109) est un support (109) de l'unité moteur-transmission (103), destinée à prendre appui sur le véhicule.

3. Groupe motopropulseur selon l'une des revendications 1 ou 2, **caractérisé en ce que** la pièce rapportée (109) comprend :
- une portion principale (111) s'étendant horizontalement lorsque le groupe motopropulseur est en position de montage sur le véhicule et comprenant plusieurs orifices (113) recevant des vis de fixation à l'unité moteur-transmission (103), et
- un doigt (121) s'étendant horizontalement depuis la portion principale (111).

4. Groupe motopropulseur selon la revendication 3, **caractérisé en ce que** le doigt (121) présente un profil creux dirigé vers le bas et vers la portion (107A) de la paroi extérieure (107) de l'unité moteur-transmission (103).

5. Groupe motopropulseur selon l'une des revendications 1 à 4, **caractérisé en ce que** la pièce rapportée (109) comprend une excroissance (121) complémentaire avec la portion (107A) de la paroi extérieure (107) de l'unité moteur-transmission (103).

6. Groupe motopropulseur selon la revendication 5, **caractérisé en ce que** la portion (107A) de la paroi extérieure (107) de l'unité moteur-transmission (103) présente un profil creux et une cavité annexe (107B), l'excroissance (121) s'étendant au-dessus du profil creux en vue de former l'orifice d'élingage (105) et ayant une extrémité (125) engageant dans la cavité annexe (107B).

7. Groupe motopropulseur selon l'une des revendications 1 à 6, **caractérisé en ce que** l'entrefer (105B) présente un écartement maximum inférieur à 15mm et/ou supérieur à 5mm.

8. Groupe motopropulseur selon l'une des revendications 1 à 7, **caractérisé en ce que** l'unité moteur-transmission (103) comprend un moteur à combustion (M), une boîte de vitesses (BV) et un moteur électrique (ME), la portion (107A) de paroi (107) et la pièce rapportée (109) complémentaire, formant l'orifice d'élingage (105), étant sur la boîte de vitesses (BV).

9. Véhicule automobile, notamment un véhicule hybride ou électrique, ledit véhicule comprenant au moins :
- un groupe motopropulseur avec une unité moteur-transmission (3 ; 103) et au moins deux orifices d'élingage (5 ; 105) et
- un châssis apte à supporter le groupe motopropulseur,
- un ou les orifices d'élingage (105) étant formé par une portion (107A) d'une paroi extérieure (107) de l'unité moteur-transmission (103) et par une pièce rapportée (109) complémentaire sur ladite paroi (107),
**caractérisé en ce que** l'orifice d'élingage (105) présente un contour (105A) avec une ouverture (105B) correspondant à un entrefer (105B) formé par la pièce rapportée (109) et la portion (107A) de la paroi extérieure (107) de l'unité moteur-transmission (103).

## Patentansprüche

1. Antriebsstrang, insbesondere für ein Hybrid-oder Elektrofahrzeug, umfassend :
- eine Motor-Getriebe-Einheit (3 ; 103) mit einer Außenwand (7 ;107), und
- mindestens zwei Anschlingen (5 ; 105) an die Motor-Getriebe-Einheit (3 ; 103) zur Befestigung an einer Hebeschlinge (1 B ; 101 B) des Antriebsstrangs,
- mindestens eine aus Gold ifices Schlinge (105) wird teilweise durch einen Abschnitt gebildet (107a) von der Wandaußenseite (107) der Einheit Motor-Getriebes (103) und, in einem anderen Teil
ein komplementärer Einsatz (109) auf dem Wand (107),
**dadurch gekennzeichnet, dass** die Schleuderöffnung (105) einen Umriss (105A) mit einer Öffnung (105B) hat, die einem Luftspalt (105B) entspricht, der durch den Einsatz (109) und den Abschnitt (107A) der Außenwand (107) von gebildet wird die Motor-Getriebe-Einheit (103).

2. Antriebsstrang nach Anspruch 1, **dadurch gekennzeichnet, dass** das Anbauteil (109) ein Träger (109) für die Motor-Getriebe-Einheit (103) ist, der am Fahrzeug anliegen soll.

3. Antriebsstrang nach einem der Ansprüche 1 oder 2, **dadurch gekennzeichnet, dass** der Einsatz (109) umfasst:
- einen Hauptabschnitt (111), der sich horizontal erstreckt, wenn sich der Antriebsstrang in der Montageposition am Fahrzeug befindet und mehrere Öffnungen (113) umfasst, die Schrauben zur Befestigung an der Motor-Getriebe-Einheit (103) aufnehmen, und
- einen Finger (121), der sich horizontal vom Hauptabschnitt (111) erstreckt.

4. Antriebsstrang nach Anspruch 3, **dadurch gekennzeichnet, dass** der Finger (121) stellt ein ein Hohlprofil nach unten gerichtet ist und in Richtung auf den Abschnitt (107a) von der Außenwand (107) der Motor-Getriebe-Einheit (103).

5. Antriebsstrang nach einem der Ansprüche 1 bis 4, **dadurch gekennzeichnet, daß** der Einsatz (109) umfasst einen Vorsprung (121) komplementär mit dem Abschnitt (107a) von der Außenwand (107) der Motor-Getriebe-Einheit (103).

6. Antriebsstrang nach nach Anspruch 5, **dadurch gekennzeichnet, dass** der Abschnitt (107a) von der Außenwand (107) der Motor-Getriebeeinheit (103) ein Hohlprofil und einen Anhang Hohlraum (107B), den Vorsprung (121) oberhalb der Verlängerungs Hohlprofil zum Bilden des Anschlaglochs (105) und mit einem Ende (125), das in den Anbauhohlraum (107B) eingreift.

7. Antriebsstrang nach einem der Ansprüche 1 bis 6, **dadurch gekennzeichnet, daß** der Luftspalt (105b) hat eine maximale Distanz von weniger als 15 mm und / oder mehr als 5 mm.

8. Antriebsstrang nach einem der Ansprüche 1 bis 7, **dadurch gekennzeichnet, dass** der Motor-Getriebe-Einheit (103) umfasst einen Verbrennungsmotor (M), ein Getriebe (BV) und einem Elektromotor (ME), der Abschnitt (107a) der Wand (107) und der komplementäre Einsatz (109), der die Schleuderöffnung (105) bildet, befindet sich auf dem Getriebe (BV).

9. Kraftfahrzeug, insbesondere Hybrid- oder Elektrofahrzeug, wobei das Fahrzeug mindestens umfasst:
- einen Antriebsstrang mit einer Motor-Getriebe-Einheit (3 ; 103) und mindestens zwei Schleuderöffnungen (5 ; 105) und
- ein Chassis, das den Antriebsstrang unterstützen kann,
- ein oder mehrere Anschlaglöcher (105), die durch einen Abschnitt (107A) einer Außenwand (107) der Motor-Getriebe-Einheit (103) und durch einen komplementären Einsatz (109) an der Wand (107) gebildet werden,
**dadurch gekennzeichnet, dass** die Schleuderöffnung (105) einen Umriss (105A) mit einer Öffnung (105B) hat, die einem Luftspalt (105B) entspricht, der durch den Einsatz (109) und den Abschnitt (107A) der Außenwand (107) von gebildet wird die Motor-Getriebe-Einheit (103).

## Claims

1. Powertrain, in particular for a hybrid or electric vehicle, comprising :
- an engine-transmission unit (3 ; 103) with an outer wall (7 ; 107), and
- at least two ports slinging (5 ; 105) on the motor-transmission unit (3 ; 103), for attachment to a lifting sling (1 B ; 101 B) of the drive train,
- at least one of the sling holes (105) being formed in part by a portion (107A) of the wall exterior (107) of unity motor-transmission (103) and, in another part, a complementary insert (109) on said wall (107),
**characterized in that** the slinging orifice (105) has an outline (105A) with an opening (105B) corresponding to an air gap (105B) formed by the insert (109) and the portion (107A) of the outer wall (107) of the engine-transmission unit (103).

2. Powertrain according to claim 1, **characterized in that** the attached part (109) is a support (109) for the engine-transmission unit (103), intended to bear on the vehicle.

3. Powertrain according to one of claims 1 or 2, **characterized in that** the insert (109) comprises :
- a main portion (111) extending horizontally when the powertrain is in the mounting position on the vehicle and comprising
several openings (113) receiving screws for fixing to the engine-transmission unit (103), and
- a finger (121) extending horizontally from the main portion (111).

4. Powertrain according to claim 3, **characterized in that** the
finger (121) present an a hollow profile directed downwards and towards the portion (107A) of the outer wall (107) of the motor-transmission unit (103).

5. Powertrain according to one of claims 1 to 4, **characterized in that** the insert (109) comprises a protuberance (121) complementary with the portion (107A) of the outer wall (107) of the motor-transmission unit (103).

6. Powertrain according to claim 5, **characterized in that** the
portion (107A) of the outer wall (107) of the engine-transmission unit (103) has a hollow profile and an annex cavity (107B), the protuberance (121) extending above the hollow profile to form the slinging hole (105) and having one end (125) engaging the annex cavity (107B).

7. Powertrain according to one of claims 1 to 6, **characterized in that** the air gap (105B) has a maximum distance less than 15 mm and / or greater than 5mm.

8. Powertrain according to one of claims 1 to 7, **characterized in that** the motor-transmission unit (103) comprises a combustion engine (M), a gearbox (BV) and an electric motor (ME), the portion (107A) of wall (107) and
the complementary insert (109), forming the slinging orifice (105), being on the gearbox (BV).

9. Motor vehicle, in particular a hybrid or electric vehicle, said vehicle comprising at least:
- a powertrain with an engine-transmission unit (3 ; 103) and at least two orifices slinging (5 ; 105) and
- a chassis capable of supporting the powertrain,
- One or more slinging holes (105) being formed by a portion (107A) of an outer wall (107) of the engine-transmission unit (103) and by
a complementary insert (109) on said wall (107),
**characterized in that** the slinging orifice (105) has an outline (105A) with an opening (105B) corresponding to an air gap (105B) formed by the insert (109) and the portion (107A) of the outer wall (107) of the engine-transmission unit (103).
